# EUROPÄISCHE PATENTSCHRIFT

(11) **EP 1 331 234 B1**
(45) Veröffentlichungstag und Bekanntmachung des Hinweises auf die Patenterteilung: **22.09.2004**
(21) Anmeldenummer: 02405047.8
(22) Anmeldetag: 28.01.2002
(51) Int. Cl.: C08G 59/68

(54) **Vergussmasse auf der Basis duroplastischer Epoxidharze**
Potting composition based on duroplastic epoxid resin
Composition d'enrobage basée sur des résines epoxy thermodurcissables

(43) Veröffentlichungstag der Anmeldung: 30.07.2003
(73) Patentinhaber: ABB Research Ltd., 8050 Zürich (CH)
(72) Erfinder: Rocks, Jens, 8057 Zürich (CH); Halter, Martin, 6403 Küssnacht (CH)
(74) Vertreter: ABB Patent Attorneys

(56) Entgegenhaltungen:
- WO-A-91/05023
- DE-A- 19 828 248
- US-A- 3 244 731
- US-A- 4 713 137

## Beschreibung

Die Erfindung betrifft eine Vergussmasse auf der Basis duroplastischer Epoxidharze. Vergussmassen bzw. Giessharzsysteme auf der Basis duroplastischer Epoxidharze sind an sich bekannt. Solche Giessharzsysteme finden vielfältige Anwendung, beispielsweise als Beschichtungen, Klebstoffe oder als Matrixharz für faserverstärkte Kunststoffe. Im Bereich der Elektrotechnik, insbesondere im Schaltanlagenbau, besitzen Epoxidharze als Isoliermaterialien eine wesentliche Bedeutung. Ebenso finden solche Epoxidharzsysteme weitere Anwendungen als Isoliermaterialien in der Herstellung von Messwandlern, Durchführungen, Leistungsschaltern, Trockentransformatoren, elektrischen Maschinen, in der Leistungselektronik, der Mikroelektronik sowie in der Automatisierungstechnik.

Härtbare Vergussmassen auf der Basis duroplastischer Epoxidharze bestehen in der Regel aus den Komponenten Epoxidharz, Härter, Beschleuniger, Füllstoff und weitere Zusatzstoffe. In der Elektrotechnik werden derzeit vorwiegend mit Partikeln gefüllte Epoxidharzsysteme eingesetzt. Solche Systeme mit einem Füllgrad von bis zu 70 Gew.-% sind an sich bekannt, wobei als bevorzugte Füllstoffe SiO₂, Al₂O₃, Wollastonit (CaSiO₃) und/oder CaMg(CO₃)₂ (Dolomit) zum Einsatz kommen.

Um bei der Aushärtung des Harzsystems während der Formgebung wirtschaftliche Formbelegungszeiten zu erreichen, werden Beschleuniger eingesetzt, welche die Vernetzungsreaktion zwischen dem Epoxidharz und dem Härter beschleunigen. Dies führt zu kürzeren Aushärte- und Presszeiten. Es besteht deshalb ein Bedarf an Vergussmassen, welche möglichst kurze Aushärte- und Presszeiten aufweisen.

### Stand der Technik

Als typische Beschleuniger für härtbare Vergussmassen auf der Basis duroplastischer Epoxidharze sind beispielsweise Benzyldimethylamin oder 1-Methylimidazol bekannt. Diese Beschleuniger zeigen aber nur wenig Wirkung für Vergussmassen auf der Basis von Epoxidharzen, welche mindesten eine Aminoglycidylgruppe aufweisen.

### Darstellung der Erfindung

Es wurde nun gefunden, dass eine härtbare Vergussmasse auf der Basis von Epoxidharzon mit mindesten einer Aminoglycidylgruppe im Molekül, eine unerwartet erhöhte Härtungsgeschwindigkeit aufweist, wenn diese Vergussmasse (i) ein Epoxidharz mit mindesten einer Aminoglycidylgruppe im Molekül, (ii) einen Härter sowie (iii) ein Fluorotensid enthält. Die Vergussmasse kann weitere Additive enthalten. Die Gelzeit einer solchen Vergussmasse ist, im Vergleich mit der Wirkung von konventionellen Beschleunigern, erheblich verkürzt, beispielsweise bis auf die Hälfte der üblichen Gelzeit. Als Folge ergeben sich erheblich verkürzte Zykluszeiten und eine deutlich erhöhte Wirtschaftlichkeit des Produktionsverfahrens.

Ein Tensid besteht in der Regel aus einem hydrophoben Teil und einem hydrophilen Teil. Der hydrophobe Teil ist meist ein Kohlenwasserstoff, wie beispielsweise ein Fettsäurerest; der hydrophile Teil ist anionisch, kationisch, nichtionisch oder amphother. Gemäss der vorliegenden Erfindung wird ein Tensid eingesetzt, welches als hydrophoben Rest einen teilweise oder gänzlich fluorierten Kohlenwasserstoffrest und als hydrophilen Teil einen anionischen, kationischen, nicht-ionischen oder amphotheren Rest, aufweist. Ein solches Tensid wird als "Fluorotensid" bezeichnet. Fluorotenside sind an sich bekannt und beispielsweise in US 4,176,176, US 3,993,745 und US 3,993,744 beschrieben. Solche Fluorotenside sind im Handel beispielsweise unter den Marken ZonyL® und Fluorad® erhältlich.

Die vorliegende Erfindung ist in den Patentansprüchen definiert. Insbesondere betrifft die vorliegende Erfindung eine härtbare Vergussmasse, enthaltend ein Epoxidharz und einen Härter und gegebenenfalls weitere Additive, dadurch gekennzeichnet, dass die Vergussmasse mindestens (i) ein Epoxidharz, welches mindestens eine Aminoglycidylgruppe im Molekül aufweist, (ii) einen an sich bekannten Härter oder ein Gemisch solcher Härter, sowie (iii) ein Fluorotensid, enthält.

Die erfindungsgemässe Vergussmasse ist sowohl für die Verwendung als Beschichtung, als Klebstoff, als Matrixharz für faserverstärkte Kunststoffe, im Bereich der Elektrotechnik, insbesondere im Schaltanlagenbau, als Konstruktionswerkstoff oder als Isoliermaterial für die Herstellung von Messwandlern, Durchführungen, Leistungsschaltern, Trockentransformatoren, elektrischen Maschinen, geeignet und kann auch in der Leistungselektronik, der Mikroelektronik sowie in der Automatisierungstechnik verwendet werden.

In diesem Sinne betrifft die vorliegende Erfindung die Verwendung der erfindungsgemässen Vergussmasse als Beschichtung, als Klebstoff, als Matrixharz für faserverstärkte Kunststoffe, als Konstruktionswerkstoff oder als Isoliermaterial auf dem Gebiet der Elektrotechnik.

Die Erfindung betrifft im weiteren die aus den erfindungsgemässen Vergussmasse hergestellten Beschichtungen, Klebstoffe, faserverstärkten Kunststoffe, Konstruktionsteile und elektrischen Isolierungen.

Die Erfindung betrifft im weiteren ein Verfahren zur Herstellung der erfindungsgemässen Vergussmassen.

Das zu verwendende Fluorotensid ist massgeblicher Bestandteil der vorliegenden Erfindung. Vorzugsweise entspricht das Fluorotensid der allgemeinen Formel (I)

R-[C(R)(R₁)-C(R)(R₁)]ₓ-A (I),

worin der hydrophobe Rest der allgemeinen Formel (Ia):

R-[C(R)(R₁)-C(R)(R₁)]ₓ- (Ia),

entspricht, und A den hydrophile Teil des Tensids bezeichnet, worin
R und R₁ unabhängig von einander Wasserstoff oder Fluor, und
x eine ganze Zahl 2-12, vorzugsweise 2-10, vorzugsweise 3-8, und vorzugsweise 3-5, bedeuten.

Bedeutet der hydrophobe Rest der Formel (I) einen teilweise fluorierten Kohlenwasserstoffrest, so bedeutet vorzugsweise die Hälfte, und vorzugsweise etwa 80%, der anwesenden Substituenten R und R₁ unabhängig von einander Fluor. Bevorzugt sind perfluorierte Reste der allgemeinen Formel (I), d.h. Reste worin sämtliche Substituenten R und R₁ Fluor bedeuten.

Der hydrophile Anteil A der Verbindung der allgemeinen Formel (I) entspricht vorzugsweise der allgemeinen Formel (Ib) :

-[C(R₂)(R₃)-C(R₂)(R₃)O]_{y}-B (Ib),

worin
R₂ und R₃ unabhängig von einander Wasserstoff oder Fluor, vorzugsweise Wasserstoff,
y Null oder eine ganze Zahl im Bereich von 1 bis 10, vorzugsweise Null oder 1 bis 6 und insbesondere Null, 1, 2, 3 oder 4, und
B Wasserstoff oder einen anionischen, kationischen oder amphotheren Rest, bedeuten.

Anionische Reste B der Formel (Ib) sind beispielsweise -C(O)OH, -P(O)OH, -P(O)(OH)₂, -S(O)OH, -S(O)₂OH, oder ein Salz davon, oder -(CH₂)_{z}-C(O)OH, -(CH₂)_{z}O-P(O)OH, -(CH₂)_{z}O-P(O)(OH)₂, -(CH₂)_{z}-OS(O)OH, -(CH₂)_{z}O-S(O)₂OH, worin z 1, 2 ,3, oder 4 bedeutet, oder ein Salz davon, vorzugsweise ein Salz von Natrium oder Kalium oder Ammonium.

Kationische Reste B der Formel (Ib) sind beispielsweise -CH₂C(O)NHCH₂CH₂[NH(CH₃)CH₂CH₂NH(CH₃)]²⁺(Anion)₂, sowie analoge Verbindungen.

Nicht-ionische Reste A der Formel (I) ergeben sich insbesondere, wenn B in der Formel (Ib) Wasserstoff bedeutet. Weitere Beispiele sind Verbindungen, worin B einen Acylrest bedeutet, wie beispielsweise [-(O)C-CₙH₂ₙ₊₁], worin n eine Zahl von 1-22 bedeutet. Ein solcher Acylrest kann weitere Substituenten tragen, welche gegebenenfalls den nicht-ionischen Charakter verändern, wie beispielsweise Hydroxyl, Amino oder Carboxyl. Zahlreiche weitere Kombinationen sind denkbar.

Amphothere Reste sind solche, wo B in der Formel (Ia) beispielsweise -CH₂CHO(O)CCH₂CH₂N⁺(CH₃)₂CH₂COO⁻, oder -CH₂CHOCH₂C(O)NHCH₂CH₂N⁺(CH₃)₂CH₂COO⁻ bedeutet, sowie weitere solche Kombinationen von kationischen und anionischen Gruppen in dem selben Molekül.

Bevorzugt sind nicht-ionische Verbindungen der Formel (I), insbesondere Verbindungen worin B Wasserstoff bedeutet.

Bevorzugt sind insbesondere nicht-ionische Verbindungen der Formel (II):

F- (CF₂-CF₂)ₓ-CH₂-CH₂O-(CH₂-CH₂O)_{y}-H (II)

worin x und y die oben angegebenen Bedeutungen haben.

Das Fluorotensid [Komponente (iii)] verwendet man vorzugsweise in Mengen (berechnet auf das reine Fluorotensid) von 0.1-5.0 Gew.-%, vorzugsweise von 0.5-3.0 Gew.-%, vorzugsweise von etwa 1.0-1.5 Gew.-%, jeweils bezogen auf das Gesamtgewicht der Komponenten (i) und (ii), das heisst bezogen auf das Gesamtgewicht des in der Vergussmasse anwesenden Epoxidharzes und Härters.

Das Fluorotensid kann in flüssiger oder pastöser Form, als Feststoff oder gelöst in einem geeigneten Lösungsmittel, vorliegen und in dieser Form direkt verwendet werden.

Bemerkenswert ist, dass das Fluorotensid, je nach dessen chemischer Struktur, sowohl mit dem Epoxidharz als auch mit dem Härter zu reagieren vermag. Infolge der geringen Mengen, welche zur Anwendung kommen, kann das Fluorotensid überraschenderweise auch als wässrige Lösung, beispielsweise in einer Konzentration von 40 Gew.-%, verwendet werden, obwohl die Anwesenheit von Wasser in der Verarbeitung von Epoxidharzen an sich unerwünscht ist.

Bevorzugte sind Epoxidharze der Komponente (i) mit guten elektrischen Eigenschaften, vorzugsweise aromatische und/oder cycloaliphatische Epoxidharze, wobei das Epoxidharz mindestens eine Aminoglycidylgruppe im Molekül aufweist. Solche in der Elektroindustrie verwendeten Epoxidharze sind an sich aus der Literatur bekannt und beispielsweise in WO 99/67315 beschrieben.

Bevorzugt sind Epoxidharze mit im Durchschnitt mehr als einer Epoxidgruppe pro Molekül, von denen mindestens eine als Aminoglycidylgruppe vorliegt. Besonders geeignete Aminoglycidylverbindungen sind N,N-Diglycidylanilin, N,N-Diglycidyltoluidin, N,N,N',N'-Tetraglycidyl-1,3-diaminobenzol, N,N,N',N'-Tetraglycidyl-1,4-diaminobenzol, N,N,N',N'-Tetraglycidylxylylendiamin, N,N,N',N'-Tetraglycidyl-4,4'-diaminodiphenylmethan, N,N,N',N'-Tetraglycidyl-3,3'diethyl-4,4'-diaminodiphenylmethan, N,N,N',N'-Tetraglycidyl-3,3'-diaminodiphenylsulfon, N,N'-Dimethyl-N,N'-diglycidyl-4,4'-diaminodiphenylmethan, N,N,N',N'-Tetraglycidyl-a,a'-bis(4-aminophenyl)-p-diisopropylbenzol und N,N,N',N'-Tetraglycidyl-a,a'-bis-(3,5-dimethyl-4-aminophenyl)-p-diisopropylbenzol. Bevorzugte Aminoglycidylverbindungen sind: 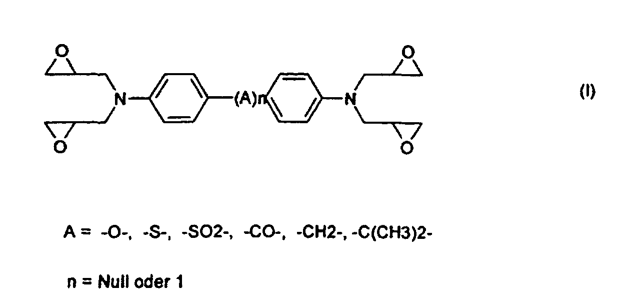 sowie 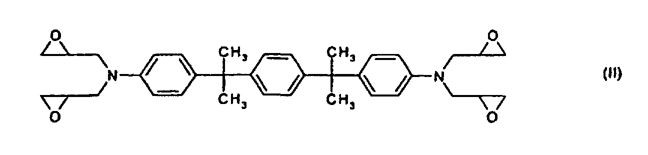 und

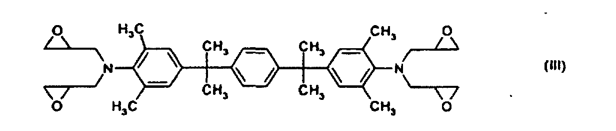

Geeignete Polyglycidylverbindungen von Aminophenolen sind auch O,N,N-Triglycidyl-4-aminophenol, O,N,N-Triglycidyl-3-aminophenol und 2,2-(N,N-Diglycidyl-4-aminopheny-1,4'-glycidyloxyphenyl)-propan. Weitere Aminoglycidylverbindungen, die erfindungsgemäss eingesetzt werden können, sind beschrieben in Houben-Weyl, Methoden der Organischen Chemie, Band E20, Makromolekulare Stoffe, Georg Thieme Verlag Stuttgart, 1987, Seiten 1926-1928. Die tri- und tetrafunktionellen Aminoglycidylverbindungen können beispielsweise nach den in den US. 2 884 406, US 2 921 037 und US 2 951 822 sowie nach den in der EP 0 148 117 beschriebenen Verfahren hergestellt werden.

Zusammen mit den Aminoglycidylverbindungen können andere Polyepoxide mit verwendet werden, wobei deren Anteil in der Epoxidharzmischung zwischen 1 Mol-% und maximal 75 Mol-%, vorzugsweise zwischen 10 und 50 Mol-%, betragen kann. Diese anderen Polyepoxide können aliphatisch, cycloaliphatisch, aromatisch oder heterocyclisch sein, sie können auch Substituenten wie Halogene, Hydroxyl, Ether- oder andere Reste aufweisen. Im allgemeinen basieren sie auf den bekannten und in der Literatur ausführlich beschriebenen mehrwertigen Phenolen, wie z.B. Bisphenol-A, Bisphenol-F und Bisphenol-S, auf epoxidierten Phenol- oder Kresol-Novolaken und auf cycloaliphatischen Epoxidharzen. Beispiele für aliphatische Epoxidharze sind Epoxyalkane, Diglycidylether von Diolen sowie cis/trans 1,4-Cyclohexandimethanol-diglycidylether. Beispiele für cycloaliphatische Epoxidharze sind Cyclohexenoxid, 4-Vinyl-1-cyclohexendiepoxid und 3,4-Epoxycyclohexan-carbonsäure-(3,4-epoxycyclohexyl-methylester).

Bevorzugt werden solche Glycidylverbindungen zugemischt, welche mindestens zwei 1,2-Epoxidgruppen im Molekül aufweisen. Vorzugsweise mischt man ein Gemisch von solchen Polyglycidylverbindungen zu, beispielsweise ein Gemisch von Diglycidyl- und Triglycidylverbindungen. In der Regel kann aus den bekannten Glycidylverbindungen eine für die vorgesehene Anwendung geeignete Auswahl getroffen werden, was für den Fachmann ein Optimierungsproblem darstellt.

Als Härter verwendet man an sich bekannte hydroxylhaltige Verbindungen und/oder carboxylhaltige Polymere, insbesondere carboxylterminierte Polyester und/oder carboxylhaltige Acrylat- und/oder Methacrylatpolymere und/oder Carbonsäureanhydride.

Geeignete Härter sind cyclische Anhydride von aromatischen, aliphatischen, cycloaliphatischen und heterocyclischen Polycarbonsäuren. Besonders geeignete Anhydride von aromatischen Polycarbonsäuren sind Phthalsäureanhydrid und deren substituierte Derivate, Benzol-1,2,4,5-tetracarbonsäuredianhydrid (Pyromellithsäuredianhydrid) und deren substitu-ierte Derivate, sowie Verbindungen der Formel (IV):

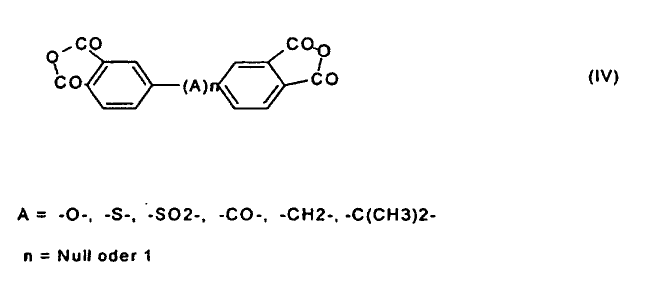

Als Härter geeignete Anhydride sind beispielsweise Phthalsäureanhydrid, 4-Methylphthalsäureanhydrid, 3,6-Dichlorphthalsäureanhydrid, 4,5-Dichlorphthalsäureanhydrid, 3,6-Difluorphthalsäureanhydrid, Tetrabrom-, Tetrachlor- und Tetrafluorphthalsäureanhydrid, 3-Nitro- und 4-Nitro-phthalsäureanhydrid, Benzol-1,2,4,5-tetracarbonsäuredianhydrid (Pyromellithsäuredianhydrid), 3,3',4,4'-Benzophenontetracarbonsäuredianhydrid, 2,2-Bis(3,4-benzoldicarboxyphenyl)-propan-dianhydrid, 2,2-Bis(2,3-benzoldicarboxyphenyl)-propandianhydrid, 2,2-Bis(4,4-benzoldicarbonsäureanhydrid)-perfluorpropan, Bis(3,4-dicarboxyphenyl)etherdianhydrid, Bis(3,4-dicarboxylphenyl)methandianhydrid, 2,2',3,3-Diphenyltetracarbonsäuredianhydrid und 3,3',4,4'-Diphenyltetracarbonsäuredianhydrid. Die aromatischen Carbonsäureanhydride können zusätzliche funktionelle Gruppen enthalten. Beispiele sind Benzol-1,2,4-tricarbonsäureanhydrid (Trimellithsäureanhydrid), 3-Hydroxyphthalsäureanhydrid, 3- bzw. 4-Maleinimidophthalsäureanhydrid sowie das 2-Sulfobenzoesäure-cyclo-anhydrid. Geeignet sind auch Derivate des Trimellithsäureanhydrids wie z.B. das Bistrimellithsäureanhydrid des Neopentylglykols.

Ebenso sind aromatische Carbonsäureanhydride mit kondensierten Ringsystemen geeignet, wie z.B. 1,8-Naphthalsäureanhydrid, Naphthalin-1,4,5,8-tetracarbonsäuredianhydrid, Naphthalin-1,2,5,6-tetracarbonsäuredianhydrid, Naphthalin-3,4,5,8-tetracarbonsäuredianhydrid, Naphthalin-2,3,6,7-tetracarbonsäuredianhydrid, 3,4,9,10-Perylentetracarbonsäuredianhydrid und ihre Halogen und Nitroderivate.

Besonders bevorzugt ist Maleinsäureanhydrid. Es ist als alleiniges Härtungsmittel für Aminoglycidylharze und für ihre Mischungen mit anderen Epoxidharzen verwendbar. Maleinsäureanhydrid ist in den Aminoglycidylharzen sehr gut löslich. In Gemischen mit anderen Anhydriden wirkt Maleinsäureanhydrid als Löslichkeitsvermittler und erhöht die Lösungsgeschwindigkeit. Die gehärteten Harze haben eine hervorragende thermische Stabilität und hohe Glasübergangstemperaturen. Andere bevorzugte Anhydride sind Derivate des Maleinsäureanhydrids, wie z.B. Methyl- und Dimethylmaleinsäureanhydrid, Phenyl- und Diphenylmaleinsäureanhydrid, Brommaleinsäureanhydrid, Dichlormaleinsäureanhydrid, und verwandte Maleinsäureanhydride. Einige cycloaliphatische Dicarbonsäureanhydride, wie sie erfindungsgemäss verwendet werden können, haben den Vorteil, dass sie flüssig oder niedrig schmelzend sind, wie z.B. cis-Cyclohexan-1,2-dicarbonsäureanhydrid, 4-Methyl-cylohexan-1,2-dicarbonsäureanhydrid, Methylcyclohexen-4,5-dicarbonsäureanhydride und bicyclische Verbindungen wie Methyl-5-norbornen-2,3-dicarbonsäureanhydrid und dessen isomere Mischungen (NADIC Methylanhydride). Andere geeignete mono- und bicyclische cycloaliphatische Dicarbonsäureanhydride sind 1,2,3,4-Cyclobutantetracarbonsäuredianhydrid, cis-1,2,3,4,-Cyclopentantetracarbonsäuredianhydrid, trans-Cyclohexan-1,2-dicarbonsäureanhydrid, 1-Cyclopenten-1,2-dicarbonsäureanhydrid, cis-4-Cyclohexen-1,2-dicarbonsäureanhydrid, cis-5-Norbomen-endo-2,3-dicarbonsäureanhydrid (NADIC Anhydride), Bicyclo[2,2,2]oct-7-en-2,3,5,6-tetracarbonsäuredianhydrid und 1,4,5,6,7,7-Hexachloro-5-norbornen-2,3-dicarbonsäureanhydrid (HET-Anhydrid).

Heterocyclische Carbonsäureanhydride, die erfindungsgemäss verwendet werden können, sind z.B. Pyridin-2,3-dicarbonsäureanhydrid, Pyridin-3,4-dicarbonsäureanhydrid, Pyrazin-2,3-dicarbonsäureanhydrid, Pyrazin-2,3,5,6-tetracarbonsäuredianhydrid, Thiophen-2,3,4,5-tetra-carbonsäuredianhydrid, Tetrahydrofuran-2,3,4,5-tetracarbonsäuredianhydrid, Isatosäure-anhydrid und N-Methyl-isatosäureanhydrid.

Das als Härtungsmittel verwendete Carbonsäureanhydrid wird in an sich bekannten Konzentrationen im Bereich von 0,2 bis 1,2 Äquivalenten der Anhydridgruppen per 1 Epoxidäquivalent eingesetzt. Die erfindungsgemässen härtbaren Mischungen können Zusatzstoffe, wie Plastifizierungsmittel, Elastifizierungsmittel, Füllstoffe, Verstärkungsfasern sowie Flammschutzmittel und/oder Farbstoffe enthalten.

Für die Herstellung der erfindungsgemässen Vergussmasse kann man das Epoxidharz [Komponente (i)], den Härter [Komponente (ii)], das Fluorotensid [Komponente (iii)], sowie gegebenenfalls anwesende Additive, wie Füllstoffe und weitere Zusatzstoffe, in beliebiger Reihenfolge mischen. Man kann die Komponente (iii) mit einer beiden Komponenten (i) oder (ii) vormischen und anschliessend die fertige Mischung bzw. Vergussmasse herstellen. Vorzugsweise mischt man die Komponente (iii) zuerst mit dem Härter bevor man sie dann zur Herstellung der Vergussmasse verwendet. Die Vormischung wirkt sich positiv auf die Verteilung des Fluorotensids in der Vergussmasse und somit auch auf die physikalischen und mechanischen Eigenschaften des gehärteten Produktes aus.

Die Härtung der erfindungsgemässen Vergussmasse erfolgt vorzugsweise bei Temperaturen im Bereich von 50°C bis 150°C, vorzugsweise im Bereich von 80°C bis 120°C. Die Härtung der erfindungsgemässen Vergussmasse ist aber in der Regel auch bei Raumtemperatur möglich, wobei bei einer Aushärtung bei Raumtemperatur ein Aushärtungsgrad von über 90 % [gemessen mittels thermischer Analyse (DSC)] innerhalb eines Zeitraumes von wenigen Tagen bis zu wenigen Wochen erreicht wird.

Bevorzugt kommen Vergussmassen zum Einsatz, welche mindestens einen Füllstoff enthalten. Solche Füllstoffe werden in an sich bekannten Mengen zugesetzt und sind vorzugsweise Quarzmehl, Wollastonit, Aluminiumoxid und/oder Dolomit in verschiedenen an sich bekannten Mahlungen. Die Füllstoffe sind bevorzugt mit einer Silanisierung versehen, um eine optimale chemische Anbindung der Partikel in der Harzmatrix zu gewährleisten.

Die erfindungsgemässe Vergussmasse ist sowohl für die Verwendung als Beschichtung, als Klebstoff, als Matrixharz für faserverstärkte Kunststoffe, geeignet, als auch auf dem Gebiet der Elektrotechnik einsetzbar, insbesondere im Schaltanlagenbau, als Konstruktionswerkstoff oder als Isoliermaterial in der Herstellung von elektrischen Isolierungen, z.B. als Langstab-, Verbund- und Kappenisolatoren, für Stützisolatoren im Mittelspannungsbereich, in der Herstellung von Messwandlern, Durchführungen, Leistungsschaltern, Trockentransformatoren, elektrischen Maschinen, in der Leistungselektronik, der Mikroelektronik sowie in der Automatisierungstechnik. Im weiteren können die erfindungsgemässen Vergussmassen auch als Beschichtungsmaterialien für Transistoren und andere Halbleiterelemente und zum Imprägnieren von elektrischen Bauteilen verwendet werden. Ebenso kann die erfindungsgemässe Vergussmasse als Korrosionsschutz für metallische Bauteile, z.B. für Brücken und Industrieanlagen, eingesetzt werden. Die folgenden Beispiele erläutern die Erfindung.

### Beispiel 1

Eine härtbare Epoxidharzmischung des kommerziellen Harzsystems Araldit MY721 (Hersteller Vantico), bestehend aus 100 Teilen N,N,N',N'-Tetraglycidyl-4,4'-diaminodiphenylmethan (TGDDM), 48 Teilen Maleinsäureanhydrid (MA; Fluka) und 32 Teilen cis-Hexahydrophthalsäureanhydrid (HHPA; Fluka) wurden vorgelegt, indem das Epoxidharz (TGDDM) auf 65°C erhitzt und anschliessend mit den beiden Anhydrid-Härtern (MA und HHPA) versetzt wurde. Die Komponenten wurden mit einem Ultra Turrax® Mischer bei 14'000 UpM bei Raumtemperatur gemischt und anschliessend bei 200-250 mbar während 3 Minuten entgast.

Die Gelzeiten der HTP-Mischungen wurden bei 80°C und 100°C wie folgt bestimmt: (a) ohne Zugabe einer weiteren Komponente (b) Zugabe von 3 Gew.-% Benzyldimethylamin (BDMA, Härter, Ciba® DY062) und (c) Zugabe von 3 Gew.-% Zonyl® FS300 (entsprechend etwa 1.2 Gew.-% Trockensubstanz), d.i. eine Verbindung der Formel F(CF₂-CF₂)ₓ-CH₂CH₂O(CH₂CH₂O)_{y}H, worin x durchschnittlich im Bereich von 3-8, insbesondere bei etwa 4-5 und y durchschnittlich im Bereich von 1-3, und etwa bei 2, liegt. Zonyl® FS300 ist eine wässrige Lösung enthaltend etwa 40 Gew.-% an Trockensubstanz.

Die Gelzeiten der Mischungen (a), (b) und (c) wurden mit einem Bohlin Instruments CV075 Rheometer gemessen. Als Gelpunkt wurde der Schnittpunkt des Verlust- und Speichermoduls verwendet, was einem Phasenwinkel von d(delta)=45°, bzw. tand=1 entspricht. Die Messresultate sind in Tabelle 1 aufgelistet. Hierbei wird ersichtlich, dass durch die Zugabe von Zonyl®FS300, sowohl bei 80°C als auch bei 100°C, eine durchschnittliche Reduktion der Gelierungszeiten von etwa 50% erhalten wird. Die Zugabe von 7 Gew.-% Zonyl® FS300 (etwa 3 Gew.-% Trockensubstanz) ergibt ähnliche Resultate. Im Vergleich dazu zeigt der kommerzielle Beschleuniger [Versuch (b) mit Benzyldimethylamin] eine technisch bedeutend weniger relevante Verkürzung von 9-24%.

**Tabelle 1**

| | Gelzeit(sec) bei 80°C | Verkürzung der Gelzeit (%) | Gelzeit (sec) bei 100°C | Verkürzung der Gelzeit (%) |
|---|---|---|---|---|
| Versuch (a) | 3789 | -.- | 1405 | -.- |
| Versuch (b) | 2882 | 24 | 1277 | 9 |
| Versuch (c) | 1811 | 52 | 698 | 50 |

### Beispiel 2

Analoge Resultate erhält man, wenn das Epoxidharz aus Beispiel 1 (TGDDM) ersetzt durch jeweils 100 Teile (2a) N,N,N',N'-Tetraglycidyl-3,3'diethyl-4,4'-diaminodiphenylmethan, (2b) N,N,N',N'-Tetraglycidyl-3,3'-diaminodiphenylsulfon, (2c) N,N'-Dimethyl-N,N'-diglycidyl-4,4'-diaminodiphenylmethan.

### Beispiel 3

Analoge Resultate erhält man, wenn man die Härterkomponente Maleinsäureanhydrid aus Beispiel 1 ersetzt durch 48 Teile (3a) Methylmaleinsäureanhydrid, (3b) Dimethylmaleinsäureanhydrid, (3c) Phenylmaleinsäureanhydrid und (3d) Diphenylmaleinsäureanhydrid.

### Beispiel 4

Analoge Resultate erhält man, wenn man die Härterkomponente cis-Hexahydrophthalsäureanhydrid ersetzt durch 32 Teile (4a) cis-Cyclohexan-1,2-dicarbonsäureanhydrid, (4b) Benzol-1,2,4,5-tetracarbonsäuredianhydrid, (4c) 3,3',4,4'-Benzophenontetracarbonsäuredianhydrid, (4d) 2,2-Bis(3,4-benzoldicarboxyphenyl)propan-dianhydrid, (4e) 3,3',4,4'-Diphenyltetracarbonsäuredianhydrid.

## Patentansprüche

1. Härtbare Vergussmasse, enthaltend ein Epoxidharz und einen Härter und gegebenenfalls weitere Additive, **dadurch gekennzeichnet, dass** die Vergussmasse mindestens (i) ein Epoxidharz, welches mindestens eine Aminoglycidylgruppe im Molekül aufweist, (ii) einen an sich bekannten Härter oder ein Gemisch solcher Härter, sowie (iii) ein Fluorotensid, enthält.

2. Vergussmasse nach Anspruch 1, **dadurch gekennzeichnet, dass** das Fluorotensid der allgemeinen Formel (I)
R-[C(R)(R₁)-C(R)(R₁)]ₓ-A (I),
worin der hydrophobe Rest der allgemeinen Formel (Ia):
R-[C(R)(R₁)-C(R)(R₁)]ₓ- (Ia),
entspricht, und A den hydrophile Teil des Tensids bezeichnet, und
R und R₁ unabhängig von einander Wasserstoff oder Fluor, und
x eine ganze Zahl 2-12, vorzugsweise 2-10, vorzugsweise 3-8, und vorzugsweise 3-5, bedeuten.

3. Vergussmasse nach Anspruch 1 oder 2, **dadurch gekennzeichnet, dass** der hydrophobe Rest der Formel (I) einen teilweise fluorierten Kohlenwasserstoffrest bedeutet, in welchem mindestens die Hälfte, vorzugsweise mindestens 80%, der anwesenden Substituenten R und R₁ unabhängig von einander Fluor bedeuten.

4. Vergussmasse nach Anspruch 2, **dadurch gekennzeichnet, dass** der hydrophobe Rest der Formel (I) einen perfluorierten Rest bedeutet.

5. Vergussmasse nach einem der Ansprüche 2-4, **dadurch gekennzeichnet, dass** der hydrophile Anteil A der Verbindung der allgemeinen Formel (I) der allgemeinen Formel (Ib):
-[C(R₂)(R₃)-C(R₂)(R₃)O]_{y}-B (Ib),
entspricht, worin
R₂ und R₃ unabhängig von einander Wasserstoff oder Fluor, vorzugsweise Wasserstoff,
y Null oder eine ganze Zahl von 1 bis 10, vorzugsweise Null oder 1 bis 6 und insbesondere Null, 1, 2, 3 oder 4, und
B Wasserstoff oder einen anionischen, kationischen oder amphotheren Rest, bedeuten.

6. Vergussmasse nach Anspruch 5, **dadurch gekennzeichnet, dass** der anionische Reste B der Formel (Ib) -C(O)OH, -P(O)OH, -P(O)(OH)₂, -S(O)OH, -S(O)₂OH, oder ein Salz davon, oder - (CH₂)_{z}-C(O)OH, - (CH₂)_{z}O-P(O)OH, - (CH₂)_{z}O-P(O)(OH)₂, -(CH₂)_{z}-OS(O)OH, -(CH₂)_{z}O-S(O)₂OH, worin z eine Zahl von 1-4 bedeutet, oder ein Salz davon, vorzugsweise jeweils ein Salz von Natrium oder Kalium oder Ammonium.

7. Vergussmasse nach Anspruch 5, **dadurch gekennzeichnet, dass** der kationische Reste B der Formel (Ib) -CH₂C(O)NHCH₂CH₂[NH(CH₃)CH₂CH₂NH(CH₃)]²⁺(Anion)₂ bedeutet.

8. Vergussmasse nach Anspruch 5, **dadurch gekennzeichnet, dass** B in der Formel (Ib) Wasserstoff oder einen Acylrest, vorzugsweise [-(O)C-CₙH₂ₙ₊₁], welcher weitere Substituenten tragen kann und worin n eine Zahl von 1-22, vorzugsweise Wasserstoff, bedeutet.

9. Vergussmasse nach Anspruch 5, **dadurch gekennzeichnet, dass** B in der Formel (Ib) einen amphotheren Rest der Formel -CH₂CHO(O)CCH₂CH₂N⁺(CH₃)₂CH₂COO⁻, oder der Formel -CH₂CHOCH₂C(O)NHCH₂CH₂N⁺(CH₃)₂CH₂COO⁻ bedeutet.

10. Vergussmasse nach Anspruch 1, **dadurch gekennzeichnet, dass** das Fluorotensid der Verbindung der Formel (II):
F-(CF₂-CF₂)ₓ-CH₂-CH₂O-(CH₂-CH₂O)_{y}-H (II)
entspricht, worin x und y die in Anspruch 1 angegebenen Bedeutungen haben.

11. Vergussmasse nach einem der Ansprüche 1-10, **dadurch gekennzeichnet, dass** diese das Fluorotensid [Komponente (iii)] in einer Menge (berechnet auf das reine Fluorotensid) von 0.1-5.0 Gew.-%, vorzugsweise von 0.5-3.0 Gew.-%, vorzugsweise von etwa 1.0-1.5 Gew.-%, jeweils bezogen auf das Gesamtgewicht des in der Vergussmasse anwesenden Epoxidharzes und Härters, enthält.

12. Vergussmasse nach einem der Ansprüche 1-11, **dadurch gekennzeichnet, dass** das Epoxidharz im Durchschnitt mehr als eine Epoxidgruppe pro Molekül aufweist, von denen mindestens eine als Aminoglycidylgruppe vorliegt, vorzugsweise N,N-Diglycidylanilin, N,N-Diglycidyltoluidin, N,N,N',N'-Tetraglycidyl-1,3-diaminobenzol, N,N,N',N'-Tetraglycidyl-1,4-diaminobenzol, N,N,N',N'-Tetraglycidylxylylendiamin, N,N,N',N'-Tetraglycidyl-4,4'-diaminodiphenylmethan, N,N,N',N'-Tetraglycidyl-3,3'diethyl-4,4'-diaminodiphenylmethan, N,N,N',N'-Tetraglycidyl-3,3'-diaminodiphenylsulfon, N,N'-Dimethyl-N,N'-diglycidyl-4,4'-diaminodiphenylmethan, N,N,N',N'-Tetraglycidyl-a,a'-bis(4-aminophenyl)-p-diisopropylbenzol und N,N,N',N'-Tetraglycidyl-a,a'-bis-(3,5-dimethyl-4-aminophenyl)-p-diisopropylbenzol.

13. Vergussmasse nach einem der Ansprüche 1-11, **dadurch gekennzeichnet, dass** die Aminoglycidylverbindung den folgenden Formeln entspricht: 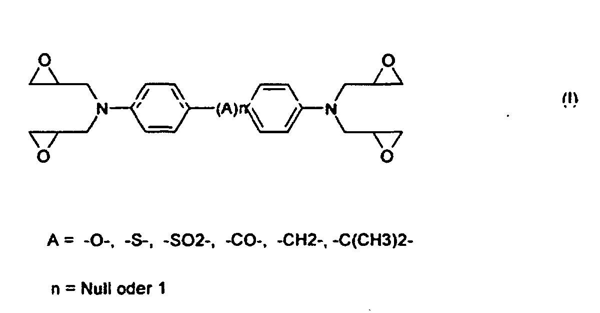 sowie 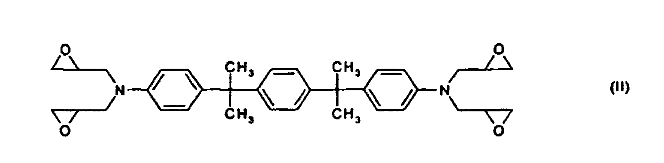 und

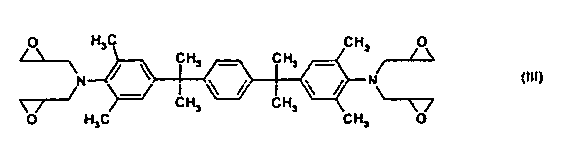

14. Vergussmasse nach einem der Ansprüche 1-11, **dadurch gekennzeichnet, dass** die Aminoglycidylverbindung von einem Aminophenol abgeleitet ist.

15. Vergussmasse nach einem der Ansprüche 1-14, **dadurch gekennzeichnet, dass** diese zusammen mit den Aminoglycidylverbindungen andere Polyepoxide enthält, wobei deren Anteil in der Epoxidharzmischung zwischen 1 Mol-% und maximal 75 Mol-%, vorzugsweise zwischen 10 und 50 Mol-%, beträgt und diese Polyepoxide vorzugsweise von mehrwertigen Phenolen abgeleitet sind, vorzugsweise von Bisphenol-A, Bisphenol-F, Bisphenol-S, von epoxidierten Phenol- oder Kresol-Novolaken und/oder von cycloaliphatischen Epoxidharzen.

16. Vergussmasse nach einem der Ansprüche 1-15, **dadurch gekennzeichnet, dass** diese als Härter eine an sich bekannte hydroxylhaltige Verbindung und/oder ein carboxylhaltiges Polymer, vorzugsweise einen carboxylterminierten Polyester und/oder ein carboxylhaltiges Acrylat- und/oder Methacrylatpolymer und/oder ein Carbonsäureanhydrid, vorzugswiese ein Carbonsäureanhydrid, enthält.

17. Vergussmasse nach einem der Ansprüche 1-16, **dadurch gekennzeichnet, dass** diese als Härter ein cyclisches Anhydrid von aromatischen, aliphatischen, cycloaliphatischen und heterocyclischen Polycarbonsäuren enthält, vorzugsweise mindestens ein Anhydrid einer aromatischen Polycarbonsäure, vorzugsweise Phthalsäureanhydrid und/oder ein substituiertes Derivat von Phthalsäureanhydrid.

18. Vergussmasse nach Anspruch 17, **dadurch gekennzeichnet, dass** diese als Härter Benzol-1,2,4,5-tetracarbonsäuredianhydrid und deren substituierte Derivate, und/oder Verbindungen der Formel (IV): 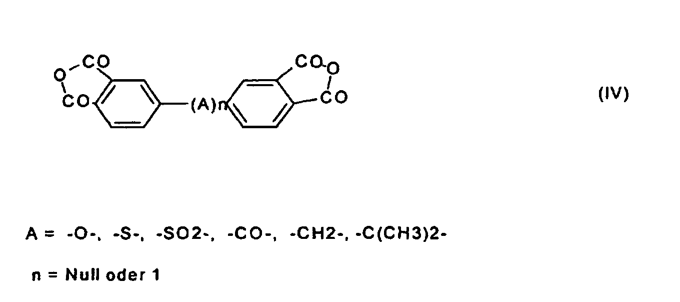 und/oder ein aromatisches Carbonsäureanhydrid mit kondensierten Ringsystemen, vorzugsweise ein Naphthalindicarbonsäureanhydrid oder Naphthalin-tetracarbonsäuredianhydrid, enthält.

19. Vergussmasse nach einem der Ansprüche 1-18, **dadurch gekennzeichnet, dass** diese das als Härtungsmittel verwendete Carbonsäureanhydrid in Konzentrationen im Bereich von 0,2 bis 1,2 Äquivalenten der Anhydridgruppen per 1 Epoxidäquivalent enthält.

20. Vergussmasse nach Anspruch 17, **dadurch gekennzeichnet, dass** diese Zusatzstoffe enthält, vorzugsweise Plastifizierungsmittel, Elastifizierungsmittel, Füllstoffe, Verstärkungsfasern, Flammschutzmittel und/oder Farbstoffe.

21. Verwendung der Vergussmasse nach einem der Ansprüche 1-20 als Beschichtung, als Klebstoff, als Matrixharz für faserverstärkte Kunststoffe, als Konstruktionswerkstoff oder als Isoliermaterial auf dem Gebiet der Elektrotechnik.

22. Die nach Anspruch 21 hergestellten Beschichtungen, Klebstoffe, faserverstärkten Kunststoffe, Konstruktionsteile und elektrischen Isolierungen.

23. Verfahren zur Herstellung einer Vergussmasse nach einem der Ansprüche 1-20, **dadurch gekennzeichnet, dass** man das Epoxidharz [Komponente (i)], den Härter [Komponente (ii)], das Fluorotensid [Komponente (iii)], sowie gegebenenfalls anwesende Additive, in beliebiger Reihenfolge mischt, vorzugsweise indem man die Komponente (iii) mit einer beiden Komponenten (i) oder (ii) vormischt und anschliessend die fertige Mischung bzw. Vergussmasse herstellt.

## Claims

1. Curable casting compound comprising an epoxy resin and a curative and, where appropriate, further additives, **characterized in that** the casting compound comprises at least (i) an epoxy resin which contains at least one aminoglycidyl group in the molecule, (ii) a conventional curative or mixture of such curatives, and (iii) a fluorosurfactant.

2. Casting compound according to Claim 1, **characterized in that** the fluorosurfactant corresponds to the general formula (I)
R-[C(R)(R₁)-C(R)(R₁)]ₓ-A (I)
in which the hydrophobic radical corresponds to the general formula (Ia):
R-[C(R)(R₁)-C(R)(R₁)]ₓ- (Ia)
and A denotes the hydrophilic moiety of the surfactant, and
R and R₁ independently of one another denote hydrogen or fluorine and
x denotes an integer 2-12, preferably 2-10, more preferably 3-8, and very preferably 3-5.

3. Casting compound according to Claim 1 or 2, **characterized in that** the hydrophobic radical of the formula (I) is a partly fluorinated hydrocarbon radical in which at least half, preferably at least 80%, of the substituents R and R₁ that are present, independently of one another, denote fluorine.

4. Casting compound according to Claim 2, **characterized in that** the hydrophilic radical of the formula (I) is a perfluorinated radical.

5. Casting compound according to any of Claims 2-4, **characterized in that** the hydrophilic component A of the compound of the general formula (I) corresponds to the general formula (Ib):
- [C(R₂)(R₃)-C(R₂)(R₃)O]_{y}-B (Ib)
in which
R₂ and R₃ independently of one another denote hydrogen or fluorine, preferably hydrogen,
y denotes zero or an integer from 1 to 10, preferably zero or from 1 to 6, and in particular zero, 1, 2, 3 or 4, and
B denotes hydrogen or an anionic, cationic or amphoteric radical.

6. Casting compound according to Claim 5, **characterized in that** the anionic radical B of the formula (Ib) denotes -C(O)OH, -P(O)OH, -P(O)(OH)₂, -S(O)OH, -S(O)₂OH, or a salt thereof, or -(CH₂)_{z}C(O)OH, -(CH₂)_{z}O-P(O)OH, -(CH₂)_{z}O-P(O)(OH)₂, -(CH₂)_{z}-OS(O)OH, -(CH₂)_{z}O-S(O)₂OH, in which z denotes a number 1-4, or a salt thereof, preferably a salt of sodium or potassium or ammonium.

7. Casting compound according to Claim 5, **characterized in that** the cationic radical B of the formula (Ib) denotes -CH₂C(O)NHCH₂CH₂[NH(CH₃)CH₂CH₂NH(CH₃)]²⁺ (anion)₂.

8. Casting compound according to Claim 5, **characterized in that** B in the formula (Ib) is hydrogen or an acyl radical, preferably [-(O)C-CₙH₂ₙ₊₁], which may carry further substituents and where n denotes a number 1-22, more preferably hydrogen.

9. Casting compound according to Claim 5, **characterized in that** B in the formula (Ib) denotes an amphoteric radical of the formula -CH₂CHO(O)CCH₂CH₂N⁺(CH₃)₂CH₂COO⁻, or of the formula -CH₂CHOCH₂C(O)NHCH₂CH₂N⁺(CH₃)₂CH₂COO⁻.

10. Casting compound according to Claim 1, **characterized in that** the fluorosurfactant corresponds to the compound of the formula (II):
F-(CF₂-CF₂)ₓ-CH₂-CH₂O-(CH₂-CH₂O)_{y}-H (II)
in which x and y are as defined in Claim 2 and 5 respectively.

11. Casting compound according to any of Claims 1-10, **characterized in that** it comprises the fluorosurfactant [component (iii)] in an amount (calculated based on the fluorosurfactant alone) of 0.1-5.0% by weight, preferably 0.5-3.0% by weight, more preferably about 1.0-1.5% by weight, based in each case on the total weight of the epoxy resin and curative that are present in the casting compound.

12. Casting compound according to any of Claims 1-11, **characterized in that** the epoxy resin contains on average more than one epoxide group per molecule, of which at least one is in the form of an aminoglycidyl group, preferably N,N-diglycidylaniline, N,N-diglycidyltoluidine, N,N,N',N'-tetraglycidyl-1,3-diaminobenzene, N,N,N',N'-tetraglycidyl-1,4-diaminobenzene, N,N,N',N'-tetraglycidylxylylenediamine, N,N,N',N'-tetraglycidyl-4,4'-diaminodiphenylmethane, N,N,N',N'-tetraglycidyl-3,3'-diethyl-4,4'-diaminodiphenylmethane, N,N,N',N'-tetraglycidyl-3,3'-diaminodiphenyl sulphone, N,N'-dimethyl-N,N'-diglycidyl-4,4'-diaminodiphenylmethane, N,N,N',N'-tetraglycidyl-α,α'-bis(4-aminophenyl)-p-diisopropylbenzene, and N,N,N',N'-tetraglycidyl-α,α'-bis(3,5-dimethyl-4-aminophenyl)-p-diisopropylbenzene.

13. Casting compound according to any of Claims 1-11, **characterized in that** the aminoglycidyl compound corresponds to the following formulae: 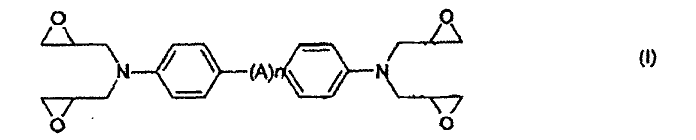 A = -O-, -S-, -SO₂-, -CO-, -CH₂-, -C(CH₃)₂-
N = zero or 1
and also 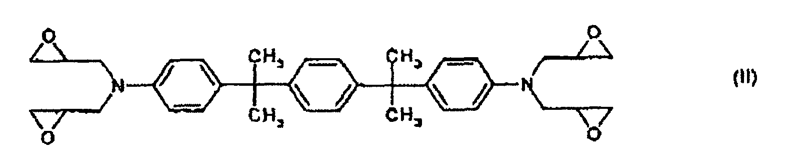 and

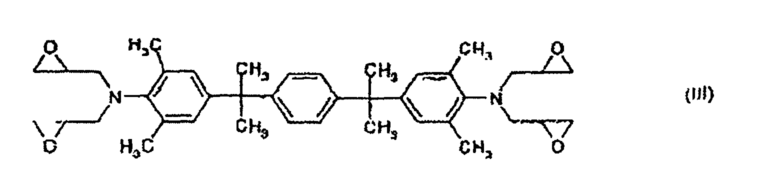

14. Casting compound according to any of Claims 1-11, **characterized in that** the aminoglycidyl compound is derived from an aminophenol.

15. Casting compound according to any of Claims 1-14, **characterized in that** together with the aminoglycidyl compounds it comprises other polyepoxides, their fraction in the epoxy resin mixture being between 1 mol% and not more than 75 mol%, preferably between 10 and 50 mol%, and these polyepoxides preferably being derived from polyhydric phenols, more preferably from bisphenol A, bisphenol F, bisphenol S, from epoxidized phenol or cresol novolacs and/or from cycloaliphatic epoxy resins.

16. Casting compound according to any of Claims 1-15, **characterized in that** it comprises as curative a conventional hydroxyl-containing compound and/or a carboxyl-containing polymer, preferably a carboxyl-terminated polyester and/or carboxyl-containing acrylate and/or methacrylate polymer and/or a carboxylic anhydride, preferably a carboxylic anhydride.

17. Casting compound according to any of Claims 1-16, **characterized in that** it comprises as curative a cyclic anhydride of aromatic, aliphatic, cycloaliphatic, and heterocyclic polycarboxylic acids, preferably at least one anhydride of an aromatic polycarboxylic acid, more preferably phthalic anhydride and/or a substituted derivative of phthalic anhydride.

18. Casting compound according to Claim 17, **characterized in that** it comprises as curative benzene-1,2,4,5-tetracarboxylic dianhydride and its substituted derivatives, and/or compounds of the formula (IV) 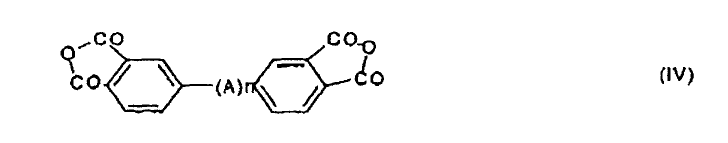 A = -O-, -S-, -SO₂-, -CO-, -CH₂-, -C(CH₃)₂-
N = zero or 1
and/or an aromatic carboxylic anhydride with fuzed ring systems, preferably a naphthalenedicarboxylic anhydride or naphthalenetetracarboxylic dianhydride.

19. Casting compound according to any of Claims 1-18, **characterized in that** it comprises the carboxylic anhydride curing agent used in concentrations in the range from 0.2 to 1.2 equivalents of the anhydride groups per epoxide equivalent.

20. Casting compound according to Claim 17, **characterized in that** it comprises additives, preferably plasticizers, elasticizers, fillers, reinforcing fibres, flame retardants and/or colourants.

21. Use of the casting compound according to any of Claims 1-20 as a coating, as an adhesive, as a matrix resin for fibre-reinforced plastics, as a construction material or as an insulating material in the electrical engineering field.

22. Coatings, adhesives, fibre-reinforced plastics, construction components, and electrical insulation systems produced according to Claim 21.

23. Process for preparing a casting compound according to any of Claims 1-20, **characterized in that** the epoxy resin [component (i)], the curative [component (ii)], the fluorosurfactant [component (iii)], and any additives present, are mixed in any order, preferably by premixing component (iii) with one or both components (i) and (ii) and subsequently preparing the finished mixture or casting compound.

## Revendications

1. Matière à couler durcissable contenant une résine époxy et un durcisseur et éventuellement d'autres additifs, **caractérisée en ce que** la matière à couler contient au moins (i) une résine époxy qui comporte au moins un groupe aminoglycidyle dans la molécule, (ii) un durcisseur connu en soi ou un mélange de tels durcisseurs, ainsi que (iii) un tensioactif fluoré.

2. Matière à couler selon la revendication 1, **caractérisée en ce que** le tensioactif fluoré correspond à la formule générale (I)
R-[C(R)(R₁)-C(R)(R₁)]ₓ-A (I)
dans laquelle le radical hydrophobe correspond à la formule générale (Ia) :
R-[C(R)(R₁)-C(R)(R₁)]ₓ- (Ia)
et A représente la partie hydrophile du tensioactif, formules dans lesquelles
R et R₁ représentent, indépendamment l'un de l'autre, un atome d'hydrogène ou de fluor, et
x représente un nombre entier allant de 2 à 12, de préférence de 2 à 10, encore mieux de 3 à 8 et en particulier de 3 à 5.

3. Matière à couler selon la revendication 1 ou 2, **caractérisée en ce que** le radical hydrophobe de formule (I) représente un radical hydrocarboné partiellement fluoré dans lequel au moins la moitié, de préférence au moins 80 % des substituants R et R₁ présents représentent, indépendamment les uns des autres, des atomes de fluor.

4. Matière à couler selon la revendication 2, **caractérisée en ce que** le radical hydrophobe de formule (I) représente un radical perfluoré.

5. Matière à couler selon l'une quelconque des revendications 2 à 4, **caractérisée en ce que** la partie hydrophile A du composé de formule générale (I) correspond à la formule générale (Ib) :
- [C(R₂)(R₃)-C(R₂)(R₃)O]_{y}-B (Ib)
dans laquelle
R₂ et R₃ représentent, indépendamment l'un de l'autre, un atome d'hydrogène ou de fluor, de préférence un atome d'hydrogène,
y est égal à zéro ou représente un nombre entier dans la plage allant de 1 à 10, de préférence zéro ou 1 à 6 et en particulier zéro, 1, 2, 3 ou 4, et
B représente un atome d'hydrogène ou un radical anionique, cationique ou amphotère.

6. Matière à couler selon la revendication 5, **caractérisée en ce que** le radical anionique B de la formule (Ib) représente -C(O)OH, -P(O)OH, -P(O)(OH)₂, -S(O)OH, -S(O)₂OH ou un sel de ceux-ci, ou -(CH₂)_{z}-C(O)OH, -(CH₂)_{z}O-P(O)OH, -(CH₂)_{z}O-P(O)(OH)₂, -(CH₂)_{z}-OS(O)OH, -(CH₂)_{z}O-S(O)₂OH, où z représente un nombre allant de 1 à 4, ou un sel d'un tel radical, de préférence dans chaque cas un sel de sodium ou de potassium ou d'ammonium.

7. Matière à couler selon la revendication 5, **caractérisée en ce que** le radical cationique B de la formule (Ib) représente
-CH₂C(O)NHCH₂CH₂[NH(CH₃)CH₂CH₂NH(CH₃)]²⁺(anion)₂.

8. Matière à couler selon la revendication 5, **caractérisée en ce que** B dans la formule (Ib) représente un atome d'hydrogène ou un radical acyle, de préférence [-(O)C-CₙH₂ₙ₊₁], qui peut porter d'autres substituants et dans lequel n représente un nombre allant de 1 à 22, de préférence un atome d'hydrogène.

9. Matière à couler selon la revendication 5, **caractérisée en ce que** B dans la formule (Ib) représente un reste amphotère de formule -CH₂CHO(O)CCH₂CH₂N⁺(CH₃)₂CH₂COO⁻ ou de formule -CH₂CHOCH₂C(O)NHCH₂CH₂N⁺(CH₃)₂CH₂COO⁻.

10. Matière à couler selon la revendication 1, **caractérisée en ce que** le tensioactif fluoré correspond au composé de formule (II) :
F-(CF₂-CF₂)ₓ-CH₂-CH₂O-(CH₂-CH₂O)_{y}-H (II)
dans laquelle x et y ont les significations données dans la revendication 1.

11. Matière à couler selon l'une quelconque des revendications 1 à 10, **caractérisée en ce qu'**elle contient le tensioactif fluoré [composé (iii)] en une quantité (calculée sur le tensioactif pur) de 0,1-5,0 % en poids, de préférence de 0,5-3,0 % en poids, encore mieux d'environ 1,0-1,5 % en poids, dans chaque cas par rapport au poids total de la résine époxy et du durcisseur présents dans la matière à couler.

12. Matière à couler selon l'une quelconque des revendications 1 à 11, **caractérisée en ce que** la résine époxy comporte en moyenne plus d'un groupe époxy par molécule, groupes époxy parmi lesquels au moins un est présent en tant que groupe aminoglycidyle, de préférence la N,N-diglycidylaniline, la N,N-diglycidyl-toluidine, le N,N,N',N'-tétraglycidyl-1,3-diaminobenzène, le N,N,N',N'-tétraglycidyl-1,4-diaminobenzène, la N,N,N',N'-tétraglycidylxylylènediamine, le N,N,N',N'-tétraglycidyl-4,4'-diaminodiphénylméthane, le N,N,N',N'-tétraglycidyl-3,3'-diéthyl-4,4'-diaminodiphénylméthane, la N,N,N',N'-tétraglycidyl-3,3'-diaminodiphénylsulfone, le N,N'-diméthyl-N,N'-diglycidyl-4,4'-diaminodiphénylméthane, le N,N,N',N'-tétraglycidyl-a,a'-bis(4-aminophényl)-p-diisopropylbenzène et le N,N,N',N'-tétraglycidyl-a,a'-bis(3,5-diméthyl-4-aminophényl)-p-diisopropylbenzène.

13. Matière à couler selon l'une quelconque des revendications 1 à 11, **caractérisée en ce que** le composé aminoglycidyle correspond aux formules suivantes : 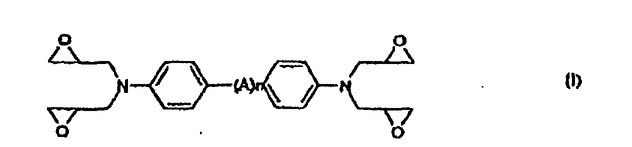 A = -O-, -S-, -SO₂-, -CH₂-, -C(CH₃)₂-
n = zéro ou 1
ainsi que 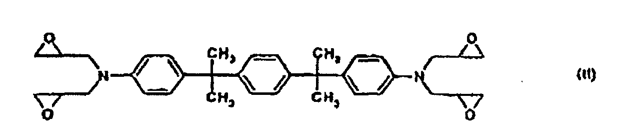 et

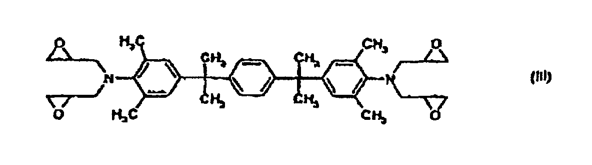

14. Matière à couler selon l'une quelconque des revendications 1 à 11, **caractérisée en ce que** le composé aminoglycidylique est dérivé d'un aminophénol.

15. Matière à couler selon l'une quelconque des revendications 1 à 14, **caractérisée en ce qu'**elle contient conjointement avec les composés aminoglycidyliques d'autres polyépoxydes, dont la proportion dans la composition de résine époxy est comprise entre 1 % en moles et au maximum 75 % en moles, de préférence entre 10 et 50 % en moles, et ces polyépoxydes sont dérivés de préférence de phénols polyhydroxylés, de préférence du bisphénol A, du bisphénol F, du bisphénol S, de Novolaques phénol ou crésol époxydées et/ou de résines époxy cycloaliphatiques.

16. Matière à couler selon l'une quelconque des revendications 1 à 15, **caractérisée en ce qu'**elle contient en tant que durcisseur' un composé contenant un groupe hydroxy et/ou un polymère contenant un groupe carboxy, connus en soi, de préférence un polyester terminé par un groupe carboxy et/ou un polymère acrylate et/ou méthacrylate contenant un groupe carboxy et/ou un anhydride d'acide carboxylique, de préférence un anhydride d'acide carboxylique.

17. Matière à couler selon l'une quelconque des revendications 1 à 16, **caractérisée en ce qu'**elle contient en tant que durcisseur un anhydride cyclique d'acides polycarboxyliques aromatiques, aliphatiques, cycloaliphatiques et hétérocycliques, de préférence au moins un anhydride d'un acide polycarboxylique aromatique, de préférence l'anhydride phtalique et/ou un dérivé substitué d'anhydride phtalique.

18. Matière à couler selon la revendication 17, **caractérisée en ce qu'**elle contient en tant que durcisseur du dianhydride benzène-1,2,4,5-tétracarboxylique et ses dérivés substitués, et/ou des composés de formule (IV) : 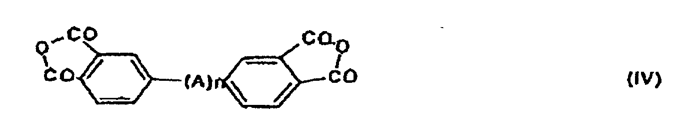 A = -O-, -S-, -SO₂-, -CO-, -CH₂-, -C(CH₃)₂-
n = zéro ou 1
et/ou un anhydride d'acide carboxylique aromatique à systèmes cycliques condensés, de préférence un anhydride naphtalènedicarboxylique ou dianhydride naphtalènetétracarboxylique.

19. Matière à couler selon l'une quelconque des revendications 1 à 18, **caractérisée en ce qu'**elle contient l'anhydride d'acide carboxylique, utilisé en tant que durcisseur, à des concentrations dans la plage allant de 0,2 à 1,2 équivalent des groupes anhydride par équivalent de groupe époxy.

20. Matière à couler selon la revendication 17, **caractérisée en ce qu'**elle contient des additifs, de préférence des plastifiants, des élastifiants, des charges, des fibres de renforcement, des agents ignifuges et/ou des colorants.

21. Utilisation de la matière à couler selon l'une quelconque des revendications 1 à 20, en tant que revêtement, en tant qu'adhésif, en tant que résine matrice pour des matières plastiques renforcées avec des fibres, en tant que matériau de construction et en tant que matériau isolant dans le domaine de l'électro-technique.

22. Revêtements, adhésifs, matières plastiques renforcées avec des fibres, pièces de construction et isolations électriques, produits selon la revendication 21.

23. Procédé pour la préparation d'une matière à couler selon l'une quelconque des revendications 1 à 20, **caractérisé en ce qu'**on mélange en un ordre quelconque la résine époxy [composant (i)], le durcisseur [composant (ii)], le tensioactif fluoré [composant (iii)] ainsi que des additifs éventuellement présents, de préférence en mélangeant au préalable le composant (ii) avec l'un des deux composants (i) et (ii) et en préparant ensuite la composition ou matière à couler finale.
